# EUROPEAN PATENT APPLICATION

(11) **EP 2 582 110 A1**
(43) Date of publication of application: **17.04.2013**
(21) Application number: 11306326.7
(22) Date of filing: 13.10.2011
(51) Int. Cl.: H04L 27/26, H04M 11/06

(54) **Method for selecting an XDSL transmission mode and residential gateway using the method**

(71) Applicant: Technicolor Delivery Technologies Belgium, 2650 Edegem (BE)
(72) Inventor: Cuzzola, Massimo, 2610 Wilrijk (BE)
(74) Representative: Arnold, Klaus-Peter

(57) **Abstract**

The method selects an xDSL transmission mode between a central office and a customer premises equipment for providing a broadband data transmission service, which automatically selects the optimal xDSL transmission mode based on measurements of the transmission parameters of the local loop during a handshaking procedure. The measurements are utilized to selectively decide which xDSL transmission mode common to both the central office and the customer premises equipment has to be used, before beginning with the broadband data transmission service. The residential gateway utilizes the method for automatically selecting an optimum xDSL transmission mode between the central office and the residential gateway.

## Description

### TECHNICAL FIELD

The invention relates to the field of broadband services over digital subscriber line (DSL), and relates in particular to a method for selecting a specific DSL mode and a respective residential gateway using the method.

### BACKGROUND OF THE INVENTION

Digital subscriber line technology is a well known data communication technology that enables a high data transmission over twisted pair copper telephone lines and is widely used, because present telephone equipment and infrastructure known as POTS can still be operated together with the new DSL services. DSL service and POTS service can operate at the same time because the DSL service uses a frequency range above the frequency range of the POTS service. During the years, several DSL standards, respectively recommendations, have been established differing in data rates and in range, for example asymmetric digital subscriber line standards ADSL, ADSL2, ADSL2+, HDSL, SDSL and very high digital subscriber line standards VDSL, VDSL2, to meet the increasing demands of internet users. These DSL standards are referred to in this application as xDSL for the sake of simplicity.

xDSL standards are defined by the International Telecommunication Union, ITU, which is an agency of the United Nations responsible for information and communication technologies. The ADSL standards are described e.g. by ITU G.992.5 Annex A for ADSL over POTS, in ITU G.992.1 Annex B for ADSL over ISDN, and ITU G.992.2 for a low data rate version ADSL light. Also for ADSL2 and ADSL2+, several standards have been established, e.g. ITU 992.3 Annex J, which has a higher upstream rate, ITU G992.3 Annex L, also called long reach DSL, which uses a lower data rate to increase the range of the service to the customer premises equipment (CPE) of a user, and ITU G.992.5 Annex M, also known as double upstream or ADSL2+M, which extends the capability of the commonly deployed Annex A by more than doubling the number of upstream bits. With Annex M, the data rates can be as high as 24 Mbit/s for the downstream and 3.3 Mbit/s for the upstream depending on the distance between the central office equipment (CO) and the customer's premises.

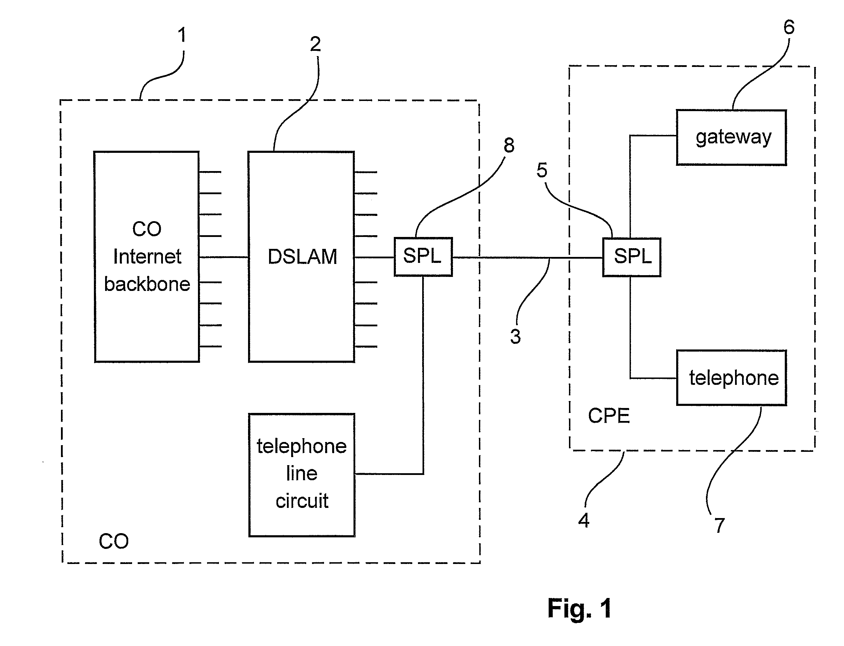

Fig. 1 illustrates in a schematic diagram a system providing both xDSL broadband data service and narrowband POTS telephone service. At the site of the central office 1, a DSL access multiplexer (DSLAM) 2 is provided for providing broadband data via a twisted pair copper line 3, also known as a local loop, to the customer premises equipment 4 of a user. The customer premises equipment 4 comprises a splitter (SPL) 5 for separating the xDSL service to a residential gateway 6 and the telephone service to a phone set 7. The central office 1 may comprise correspondingly a splitter 8 for separating the xDSL service and the telephone service.

Before performing an xDSL service, the residential gateway 4 initiates a handshaking process with the central office 1 to establish a data transmission according to a given xDSL standard. This handshaking process is defined by ITU standard G.994.1, also known as G.hs, and provides a consistent way of initiating the various types of xDSL residential gateways available now and in the future. During the handshaking process, capability lists are exchanged between the central office and the residential gateway, and then an xDSL transmission mode is selected in accordance with the capabilities of the residential gateway 4 and the central office 1, and what the user wants or is willing to pay for.

When an xDSL transmission mode is selected, a training procedure follows, during which each of the frequency channels of the selected xDSL standard are tested with regard to transmission parameters, for example signal/noise ratio S/N, interference, damping and other cable characteristics of the local loop 3, and for each frequency channel an optimized bit rate is determined according to its transmission characteristics. Then, frequency channels having a sufficient signal/noise ratio are selected, and an appropriate modulation is chosen for the selected frequency channels. The data transmission via the selected channels is a form of frequency division multiplexing (FDM) and is known as G.dmt (Discrete Multi-tone Transmission). During the training procedure, the residential gateway is synchronized with the central office and remains synchronized until the end of the session.

From on operator point of view, it is always better to set the DSLAM 2 in what is called "multimode". Multimode means that all the xDSL transmission modes are enabled and the choice to select a special mode of operation is left to the CPE 4. This is mostly because operators don't like to manage multiple profiles for their equipment.

The xDSL standards do specify all the control fields and parameters for supporting multiple modes in the handshaking selection, but what is missing are clearly defined rules to decide when the CO and the CPE has to select a specific transmission mode. For instance if both CO and CPE support ADSL2+ and ADSL2+ Annex M operation according to ITU standard G.992.5, the standard does not specify which mode has the priority, so the selection is left to the implementers of the residential gateways. This leads to the fact that two different chipsets used for the residential gateways might decide in two different ways even under the same conditions.

Another example is about the long reach ADSL2 Annex L according to ITU standard G.992.3. The standard does not specify after which loop length of the local loop 3 the ADSL2 Annex L standard has to be preferred over the normal operation ADSL2 standard, so that the operator does not always have the guarantee that the long reach mode ADSL2 Annex L will be offered to the customers that are in a long reach range.

### SUMMARY OF THE INVENTION

The invention is as set out in claims 1 and 8. Preferred embodiments of the invention are defined by the dependent claims.

The invention defines a method for selecting an xDSL transmission mode between a central office and a customer premises equipment for providing a broadband data transmission service, which is able to automatically select the optimal xDSL transmission mode with regard to the local loop. The selection is based on measurements of the transmission parameters of the local loop during a handshaking procedure. The measurements are utilized to selectively decide which xDSL transmission mode common to both the central office and the customer premises equipment has to be used, before beginning with the broadband data transmission service.

The method comprises the steps: exchanging a capabilities mode list between the central office and the customer premises equipment, the capabilities mode list including at least two xDSL transmission modes, determining the transmission parameters for each xDSL transmission mode, and selecting the optimal xDSL transmission mode with regard to a maximal data transmission rate of the local loop, which selection is based on the transmission parameters of each xDSL transmission mode.

The method provides in particular a dynamic search during a handshaking procedure for determining the transmission parameters of the local loop for each frequency channel of all xDSL transmission modes, which are common to the central office and the customer premises equipment, and selects the optimal xDSL transmission mode correlated to the optimum noise results and loop length of the local loop.

In a preferred embodiment, the method allows to automatically select the xDSL transmission standard ITU G.992.5 Annex M when the noise level is below a defined S/N value, which standard provides an advantageous data rate for the customer premises equipment of a user. In a further aspect of the invention, the method selects automatically the xDSL transmission standard ITU G992.3 Annex L when the noise level is above a defined S/N value. This allows to provide also a broadband data transmission service with a high data rate for users being in the long range of the central office.

The invention defines further a residential gateway utilizing the method for automatically selecting an optimum xDSL transmission mode between the central office and the residential gateway. The method can be implemented in the residential gateway by respective modifications of its middleware. A residential gateway is also known as a DSL router, a DSL transceiver or an ADSL transceiver and is referred to in ITU recommendations as remote transceiver units xTU-R, e.g. HSTU-R.

### BRIEF DESCRIPTION OF THE DRAWINGS

Preferred embodiments of the invention are explained in more detail below by way of example with reference to schematic drawings, which show:
- Fig. 1: a schematic diagram illustrating an xDSL transmission system for a local loop providing both broadband and narrow band telecommunication services, and
- Fig. 2: a method for selecting an optimized transmission mode for an xDSL transmission system as shown in Fig.1.

### DETAILED DESCRIPTION OF PREFERRED EMBODIMENTS

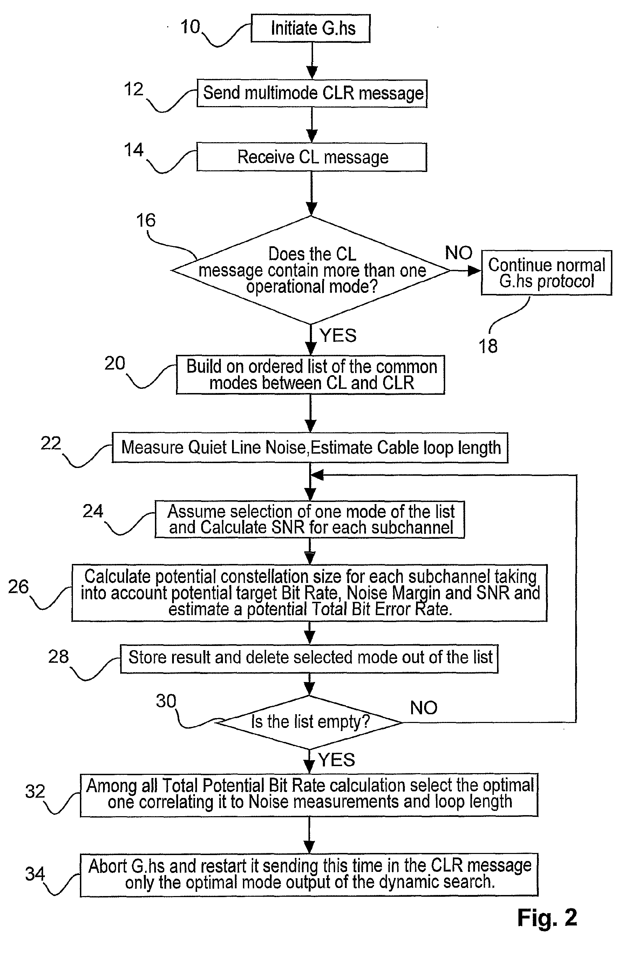

Fig. 2 describes a method for establishing an optimized xDSL transmission mode between a residential gateway of a user and a central office, in accordance with an xDSL transmission system for a local loop as described with regard to Fig. 1. When the residential gateway 6 is connected for a first time to the central office 1 via the local loop 3 and switched on, a handshaking procedure is started in a first step 10, similar to the ITU G.994.1 handshaking protocol. In a further step 12, the central office recognizes that the residential gateway has been connected to the local loop 3 and sends a capabilities list and request message CLR.

In another step, the residential gateway sends a capabilities list message CL including information about its xDSL transmission modes to the central office. The CL message is received by the central office in a consecutive step 14, and in a further step 16, the central office analyzes whether there is more than one operational xDSL mode contained in the CL message. If there is only one operational mode indicated in the CL message, the handshaking procedure continues with the handshaking protocol in accordance the G.994.1 protocol, step 18.

Does the CL message contain more than one xDSL transmission mode, then the central office builds an ordered list of all the common xDSL transmission modes usable between the central office and the residential gateway. In a further step 22, the quiet line noise for determining a signal to noise ratio S/N, damping factor and other transmission parameters are measured, and the cable loop length of the transmission line of the local loop 3 is estimated. Then, in a further step 24, a first of the xDSL transmission modes of the list is selected and the signal to noise ratio S/N is measured for each frequency channel. In a consecutive step 26, the potential constellation size including the data rate for each frequency channel is calculated by taking into account the potential target bit rate, noise margin and signal to noise ratio, and a potential total bit error rate for the selected xDSL transmission mode is determined. In a further step 28, the result is stored and the selected xDSL transmission mode is deleted from the list.

In another step 30, it is checked whether the list is empty, and if the answer is no, a second xDSL transmission mode is selected and the signal to noise ratio S/N is determined for each frequency channel, as described with regard to step 24. Then, the total bit error rate is determined in accordance with step 26 and subsequently, the result is stored and the selected xDSL transmission mode is deleted in accordance with step 28. Steps 24, 26 and 28 are continuously performed in a loop, until the list is empty. When the list is empty, in a further step 32 the optimal xDSL transmission mode is selected with regard to the determined transmission parameters of all xDSL transmission modes, as included initially in the list. Then in a final step 34, the handshaking procedure is terminated and the residential gateway sends a CL message to the central office including the optimum xDSL transmission mode as determined by the preceding steps. The handshaking procedure is terminated by the residential gateway, or alternatively, by the central office and restarted by the central office which sends a CLR message to the residential gateway, to which the residential gateway responds with a CL message including the optimum xDSL transmission mode, as defined in the preceding steps.

The method as described with regard to steps 10-34 determines therefore first all relevant transmission parameters and then calculates the potential total bit error rate for each possible xDSL transmission mode as included in the list, and then selects in a final step or in one of the final steps the optimum xDSL transmission mode in accordance with the relevant transmission parameters. Therefore, an optimum xDSL transmission mode is selected for a user, which takes into account in particular noise measurements and loop length.

The method of the present invention allows advantageously in preferred embodiments to select the xDSL transmission mode ITU G.992.5 Annex M, when the noise level is below a defined S/N value, or the xDSL transmission mode ITU G992.3 Annex L, when the noise level is above a defined S/N value as a common mode of operation, when supported by both the central office and the residential gateway, but also other embodiments of the invention may be utilized by one skilled in the art without departing from the scope of the present invention. The invention resides therefore in the claims herein after appended.

## Claims

1. A method for selecting an xDSL transmission mode between a central office (1) and a customer premises equipment (2) for providing a broadband data transmission service, the method comprising the steps
exchanging a capabilities mode list between the central office (1) and the customer premises equipment (2), the capabilities mode list including at least two xDSL transmission modes,
determining the transmission parameters for each xDSL transmission mode, and
selecting the optimal xDSL transmission mode based on the transmission parameters of each xDSL transmission mode.

2. The method of claim 1, comprising the steps
providing a dynamic search during a handshaking procedure for determining the transmission parameters of a local loop (3) for each frequency channel of all xDSL transmission modes common to the central office (CO) and the customer premises equipment (CPE),
and selecting the optimal xDSL transmission mode correlated to the optimum noise results and loop length of the local loop (3).

3. The method of claim 1 or 2, wherein the capabilities mode list includes at least one ADSL, ADSL2, ADSL2+ and/or VDSL transmission standard.

4. The method of claim 1, 2 or 3, wherein the capabilities mode list includes the ADSL transmission standards ITU G.992.5 Annex A, ITU G.992.5 Annex M and ITU G992.3 Annex L.

5. The method of claim 4, comprising the step of selecting ITU G.992.5 Annex M when the noise level is below a defined S/N value.

6. The method of claim 4, comprising the step of selecting ITU G992.3 Annex L when the noise level is above a defined S/N value.

7. The method of claim 4, comprising the step of selecting ITU G.992.5 Annex A when the noise level is between a first defined S/N value and a second defined S/N value.

8. Residential gateway (6), utilizing a method according to one of the preceding claims.
